# EUROPEAN PATENT SPECIFICATION

(11) **EP 2 951 877 B1**
(45) Date of publication and mention of the grant of the patent: **06.09.2017**
(21) Application number: 14702222.2
(22) Date of filing: 28.01.2014
(51) Int. Cl.: H01M 10/0569, H01M 10/0525, H01M 6/16, H01M 4/485, H01M 10/0567

(54) **ELECTROLYTE COMPOSITION FOR ELECTROCHEMICAL CELLS**
ELEKTROLYTZUSAMMENSETZUNG FÜR ELEKTROCHEMISCHE ZELLEN
COMPOSITION ÉLECTROLYTIQUE POUR CELLULES ÉLECTROCHIMIQUES

(30) Priority: 04.02.2013 GB 201301921
(43) Date of publication of application: 09.12.2015
(73) Proprietor: Leclanché S.A., 1400 Yverdon-les-Bains (CH)
(72) Inventor: BUQA, Hilmi, CH-5036 Oberentfelden (CH); PETTINGER, Karl-Heinz, 85748 Garching (DE); HOLZAPFEL, Michael, 76532 Baden-Baden (DE); BLANC, Pierre, CH-1110 Morges (CH)
(74) Representative: Sonnenberg, Fred
(86) International application number: PCT/EP2014/051564
(87) International publication number: WO 2014/118138

(56) References cited:
- US-A- 4 489 145
- US-A1- 2008 318 123

## Description

The field of the invention relates to an electrochemical cell electrolyte, an electrochemical cell comprising this electrochemical cell electrolyte, a method for manufacturing an electrochemical cell and use of the electrochemical cell electrolyte and the electrochemical cell as described in the respective independent claims.

### Background of the invention

Beyond consumer electronics, Li-ion batteries are growing in popularity for stationary applications as storage of renewable energy, grid levelling, large hybrid diesel engines, military, hybrid electric vehicles (HEV-s), and aerospace applications due to their high energy density.

The electrolyte is a critical component in electrochemical cells as it allows its functioning by ion conduction for charge equilibration at charge/discharge. The electrolyte is thermodynamically not stable at the anode and cathode surface in the charged state of the battery. A lithium-ion battery can only function correctly as there is a solid electrolyte interface (SEI) formed on the surface of the graphite anode which permits Li+-conduction while keeping the electrolyte from diffusing to the anode surface. On the surface of the cathode there is a SEI formed, too, which is, however, less well investigated.

Lithium titanate (LTO, Li4Ti5O12) can be used as an alternative anode material instead of graphite. It allows obtaining very safe lithium batteries that will not catch fire or explode in case of a thermal problem or short circuit. Lithium titanate cells also show a very high calendar and cycle life time. This is due to several reasons. One of these reasons is that only a very thin SEI is formed, or even none at all. The electrolyte is generally considered stable at the working potential of a lithium titanate anode, but this is questionable regarding the findings described below.

Lithium-ion batteries show a significant gas evolution during the first cycle (the so-called formation cycle). This gas evolution is due to the SEI formation on the graphite anode. Once the SEI is formed no gas will be evolved during further cycling. This is due to the fact that potential reduction of traces of electrolyte on the graphite surface generally creates solid or liquid products that are dissolved in the electrolyte or deposited in/on the SEI. But no gases evolve which could accumulate.

The situation is different in cells containing a lithium titanate anode. Here a very slight reaction occurs on continuous cycling in the course of which gaseous products evolve, these are only slightly soluble in the electrolyte and, thus, accumulate. These gases are mostly hydrogen, CO, CxHy, CO2. They can form an internal pressure in a cell with a hard case or swelling in the case of a pouch cell. Both phenomena are undesirable and can lead to safety problems and limited cycling stability, respectively. The problem of gas evolution increases with the size and capacity of the cell.

The exact mechanism for the evolution of these gasses is not exactly known, but it is believed that electrolyte solvents are reduced by Ti3+ ions on the surface of the lithium titanate in a catalytic mechanism. This is backed by the fact that gassing is increased when the titanate is fully charged and also for higher temperatures (easier diffusion of the solvent, faster reaction) (Y. Qin, Z. Chen, I. Belharouak, and K. Amine (PI): "Mechanism of LTO Gassing and potential solutions", Argonne National Laboratory, 2011 DOE Annual Peer Review Meeting Poster). In the course of this reduction hydrogen atoms are split off and yield hydrogen gas. Typically, all electrolytes contain ethylene carbonate. The ethylene carbonate molecule can be expected to yield also CO2, CO and ethylene as gaseous reaction products, which are effectively found in the gas mixture evolved. Dimethyl carbonate, following, this mechanism, could evolve CO, CO2 and methane upon catalytic reduction on the surface of lithium titanate. Following the proposed reaction mechanism (Y. Qin, Z. Chen, I. Belharouak, and K. Amine (PI): "Mechanism of LTO Gassing and potential solutions", Argonne National Laboratory, 2011 DOE Annual Peer Review Meeting Poster) it is not clear if dimethyl carbonate could generate hydrogen.

It has also been shown that the amount of gas evolved depends on the salt component of the electrolyte. For example, by using LiBF4, less gas evolves compared with LiPF6. However, the reason for this phenomenon is unclear (Y. Qin, Z. Chen, and K. Amine: "Functionalized Surface Modification agents to Suppress Gassing Issue of Li4Ti5O12-based Lithium-Ion Chemistry", Argonne National Laboratory, FY 2011 Annual Progress Report, 321-324).

Different approaches are known in the state of the art to reduce the gassing of lithium titanate based lithium batteries:
1.) One approach is the use of a formation cycle with a higher potential. By using this method the potential of the lithium titanate anode is pushed below 1.0 V and the formation of an SEI on the titanate surface is forced. During continued cycling, thus, the direct contact between electrolyte solvent and titanate surface is reduced.
2.) A further approach involves the use of additives in the electrolyte that form a SEI, as vinylene carbonate (VC), propane sultone (PS). Thus, an SEI is formed, and the direct contact between electrolyte solvent and titanate surface is reduced.
3.) Yet another approach would be the modification of the LTO surface by adding functional additives which react directly with the LTO.

One example of these approaches is the patent US 7875395 B2. This document discloses gas reduction in an electrochemical cell by using vinylene carbonate as an electrolyte additive with possible addition of 1,3-propane sultone at the time of initial charge/discharge. The use of cyclic carbonates other than vinylene carbonate as well as linear carbonates is also disclosed.

Zhang et al. ("Develop Electrolyte Additives (ANL)", Argonne National Laboratory, FY 2011 Annual Progress Report, 359-363) also use electrolyte additives as an efficient method to improve the cell performance and safety properties without significantly changing the electrolyte composition. However, they favour additives which promote formation of an SEI.

Qin et al. ("Functionalized Surface Modification agents to Suppress Gassing Issue of Li4Ti5O12-based Lithium-Ion Chemistry", see above) proposed surface modification of LTO by a chlorosilane additive, leading to significant gas reduction.

All these approaches, however, suffer from side effects: Regarding the first and second approach, a thick SEI increases the ohmic resistance in the cell and lowers the cycling efficiency. And with respect to the second and third approach, propane sultone is carcinogenic and the modification of the LTO surface can lead to higher ohmic resistance and less cycling stability.

Inagaki et al. (JP 4159954B2, same family as US 2005/0064282 A1 and US 7,910,247 B2) disclose a negative electrode comprising an electrode current collector and a negative electrode layer on one or both sides of the collector. The electrode layer in turn contains an electrode active material (for example, LTO) and an electronic conductor. The electronic conductor includes a carbonaceous material with a specific d-spacing and a specific crystallite size. The electrode active material has an electrode working potential which is at least 1 V nobler than a lithium electrode potential. This specific composition leads to less gas evolution even if a protective film is not formed. However, the "less gas evolution" is based on the use of the carbonaceous material in the electronic conductor. The electrode active material, e. g. LTO, would still give rise to gas evolution.

JP 4284232 B2 deals with a secondary battery with high temperature cycle characteristics which is equipped with an outer jacket material. Amongst others, a negative electrode is housed in the outer jacket material with a negative active material having a potential nobler than 1.0 V than the lithium electrode potential and with a negative electrode conductor using a nonstochiometric titanium oxide. There is a separator between the negative and the positive electrode. The titanium oxide in this cell, however, gives rise to the assumption that gas evolution will occur in a cell according to this disclosure.

US 2005/0221170 A1 (other family members are JP 4667071 B2 and KR 102006044479 A) discloses a secondary battery wherein the negative electrode contains a conductive agent and a negative electrode active material comprising lithium titanium oxide. The conductive agent comprises graphitized vapour grown carbon fibre with a specific lattice constant. This assembly prevents degradation of the secondary battery. There should be no surface film formed on the graphitized vapour grown carbon fibre or on the titanium oxide. However, as titanium oxide is used in this cell it is very likely that gas evolution can be observed.

The use of cyclic ethers, such as dioxolane or tetrahydrofuran, as solvent for electrolytic solutions is widely known from the prior art, as described for example in US 2008/318123 A1 or US 4 489 145 A.

### Object of the Invention

The problem to be solved by the present invention is the provision of an electrochemical cell electrolyte which reduces gas evolution in an electrochemical cell and which allows safe performance of the cell with high cycling stability and efficiency.

This problem is solved by the features as contained in the independent patent claims, with advantageous embodiments being described by the features as contained in the dependent patent claims.

### Description of the Invention

Provided is an electrochemical cell electrolyte comprising an electrolyte salt, an electrolyte solvent and an electrolyte additive wherein the electrolyte solvent is selected from cyclic ethers and additionally comprises linear carbonates.

The electrochemical cell electrolyte is intended for use in an electrochemical cell. An electrochemical cell (or battery) within the meaning of the present disclosure may be a primary cell or a secondary cell (i. e. an accumulator).

The cyclic ethers may be selected from the group comprising tetrahydrofuran (THF) and 2-methyltetrahydrofuran (2-Me-THF).

It is also intended that the electrolyte solvent may additionally comprise linear carbonates.

The linear carbonates may be selected from the group comprising dimethyl carbonates (DMC), diethyl carbonate (DEC) and ethyl methyl carbonate (EMC).

The electrolyte salt may be selected from the group comprising lithium perchlorate (LiClO4), lithium hexafluorophosphate (LiPF6), lithium tetrafluoroborate (LiBF4), lithium hexafluoroarsenate (LiAsF6), lithium hexafluoroantimonate (LiSbF6), lithium trifluoromethanesulfonate (LiCF3SO3), lithium bis[(trifluoromethyl)sulfonyl]imide (LN(CF3SO2)2), lithium bis[(pentafluoroethyl)sulfonyl]imide (LiN(C2F5SO2)2), lithium bisoxalatoborate (LiBOB), lithium difluorooxalatoborate (LidFOB), lithium trifluoro tris(pentafluoroethyl)phosphate (LiFAP) and lithium tetraphenylborate (Li(C6H5)4B).

Surprisingly, an electrochemical cell electrolyte according to the present invention reduces gas evolution in an electrochemical cell. Reduction of gas evolution means that less gases which are mostly hydrogen, CO, CxHy or CO2 evolve within the electrochemical cell. Typically, all electrolytes used at present contain ethylene carbonate. An electrochemical cell electrolyte according to the present invention, however, comprises an electrolyte solvent selected from cyclic ethers. The electrolyte solvent is, thus, free of organic carbonates such as ethylene carbonate (EC), propylene carbonate (PC) and vinylene carbonate (VC). The electrolyte solvent may additionally comprise linear carbonates such as dimethyl carbonates (DMC), diethyl carbonate (DEC) or ethyl methyl carbonate (EMC) as stated above.

It was completely unexpected that an electrolyte solvent free of organic carbonates reduces the gas evolution in the electrochemical cell. Specifically if γ-Butyrolactone (GBL) is used, the gas evolution is reduced drastically. In the case of GBL electrolyte, LiPF6 cannot be used as electrolyte salt, as a very thick SEI is formed that increases very much the internal resistance and, thus, hinders the battery from functioning correctly. LiBF4 is used as electrolyte salt instead. The reason for the massive reduction in gassing is not known. It can be speculated, however, that the charge distribution in the molecule could be responsible: all hydrogen atoms in ethylene carbonate are attached to O-bearing C atoms and bear, thus, a considerably negative partial charge. In GBL, only the hydrogen on the γ-C atom bears a comparably positive charge. The other hydrogen atoms are not attached to C atoms that are directly linked to oxygen and, thus, bear a less positive partial charge. As a consequence, the proposed reaction mechanism as described above for an anode material such as LTO could be thought to work much less well in this case as one H atom would react less well with Ti3+. Thus, the catalytic reduction employing Ti3+-ions of the surface of the LTO would be influenced.

Reduced gassing in electrochemical cells is advantageous because it can lead to less swelling of the cells, increased cooling efficiency, increased safety of the cells (gas can contain a large proportion of hydrogen, which can create a safety risk when liberated) and a higher cycle life of the cells. Thus, performance and safety of the electrochemical cell are enhanced. Less swelling of the cell due to gas evolution results in less changes of the thickness of the cell. As a consequence, such a cell needs less space in a housing or battery module and cooling of the cell within the housing or the battery module will be easier.

The electrolyte additive may represent up to 5 % of the electrochemical cell electrolyte.

The electrolyte additive may be selected from the group comprising vinylene carbonate, vinyl ethylene carbonate, propane sultone, N-containing heterocycles and aminated aromatic compounds.

The use of electrolyte additives such as vinylene carbonate, vinyl ethylene carbonate or propane sultone may lead to an SEI formation and thereby to a further reduction of gassing.

The N-containing heterocycles may be selected from the group comprising pyrrole, 2-methyl-1-pyrroline, 1-methylpyrroline, 1-vinyl-2-pyrrolidinone, pyridine, 2-picoline, 3-picoline, 4-picoline, 2-vinylpyridine, 4-vinylpyridine, dimethyl-pyridine-amine (DMPA), boran-pyridine-complex and mixtures thereof. The N-containing heterocycles may lead to a further reduction of gassing.

The aminated aromatic compounds may be selected from the group comprising aniline, toluidine, diphenylamine, naphtylamine, alkylanilines and dialkylanilines. The aminated aromatic compounds may also lead to a further reduction of gassing.

A person skilled in the art is aware of the concentrations which are suitable for the electrolyte salt, the electrolyte solvent and the electrolyte additive as part of the electrochemical cell electrolyte. The person skilled in the art also knows suitable ratios for mixtures of the electrolyte solvents. One example for an electrolyte solvent with an electrolyte salt and an electrolyte additive is γ-Butyrolactone (GBL) with 1M LiBF4 and 1% vinylene carbonate.

The electrochemical cell electrolyte of the present disclosure may be used with any type of electrochemical cells and a person skilled in the art may adapt the properties of the electrochemical cell electrolyte to different applications, i. e. to the size and material of the electrochemical cells used.

An electrochemical cell comprising the electrochemical cell electrolyte as disclosed above, an anode, a cathode and a separator is also provided.

The anode may be of a material comprising Li4Ti5O12, Li2Ti3O7, LixTiO2, TiO2, TiO2(OH)x and mixtures thereof.

Thus, the electrochemical cell may be a lithium titanate based electrochemical cell.

The anode material may additionally be coated with carbon.

The anode material may also be a mixture of the anode material as disclosed above and carbonaceous material, and the carbonaceous material may be selected from the group comprising graphite, hard carbon, amorphous carbon, carbon-containing core-shell material and silicon containing material.

The anode of the electrochemical cell may be cast from a slurry containing organic solvent or water as solvent.

The cathode may be of a material comprising LiCoO2, LiNiO2, LiNi1-x-yCoxMnyO2, LiNi1-x-yCoxAlyO2, LiMn2O4, LiM2-xMn4-yO4, LiMPO4, wherein M comprises Fe, Mn, Co or Ni, LiAyMxPO4, wherein A comprises B, P, Si, Ti, Zr, Hf, Cr, Mo or W, and mixtures thereof.

The cathode material may additionally be coated with carbon, oxides or phosphates.

The cathode of the electrochemical cell may be cast from a slurry containing organic solvent or water as solvent.

The separator may comprise ceramic and/or glass particles, such as ceramic lithium aluminium titanium phosphate. The advantage is that soft shorts in the cell are avoided or delocalized on the single (ceramic and/or glass) particles.

The invention is, however, not limited to the above materials and any electrode or separator material known can be used with the present disclosure.

A method for manufacturing an electrochemical cell is provided, wherein the method comprises the following steps:
- providing at least one anode, at least one cathode and at least one separator between the at least one anode and the at least one cathode; and
- filling an electrochemical cell electrolyte between the anode and the cathode, wherein the electrochemical cell electrolyte comprises an electrolyte salt, an electrolyte solvent and an electrolyte additive wherein the electrolyte solvent is selected from cyclic ethers and additionally comprises linear carbonates.

It is to be understood that the electrochemical cell is filled in such a way that the electrochemical cell electrolyte is in contact with the anode and the cathode.

Any electrochemical cell electrolyte as disclosed above may be employed.

The steps of providing the at least one anode, the at least one cathode and the at least one separator may comprise laminating the at least one anode, the at least one cathode and the at least one separator to each other.

A use of an electrochemical cell electrolyte as disclosed above in an electrochemical cell comprising an anode, wherein the anode material is selected from the group comprising Li4Ti5O12, Li2Ti3O7, LixTiO2, TiO2, TiO2(OH)x and mixtures thereof, is also provided.

A use of an electrochemical cell as disclosed above in consumer electronics, stationary applications as storage of renewable energy, grid levelling, large hybrid diesel engines, military, hybrid electric vehicles (HEV-s), and aerospace applications, is also provided. It is to be understood that the present disclosure also comprises any other suitable application. The applications may depend on the size and the energy density of the electrochemical cell. Small- and large-scale electrochemical cells are comprised by the present disclosure.

Consumer electronics within the meaning of present disclosure comprises but is not limited to electronic equipment intended for everyday use, for example in entertainment, communications and office productivity. Electronic equipment comprises but is not limited to personal computers, telephones, MP3 players, audio equipment, televisions, calculators, GPS automotive electronics, digital cameras and players and recorders using video media such as DVDs, VCRs or camcorders.

The invention will now be described on the basis of the embodiments and the figures. It will be understood that the embodiments and aspects of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

### Summary of the Figure

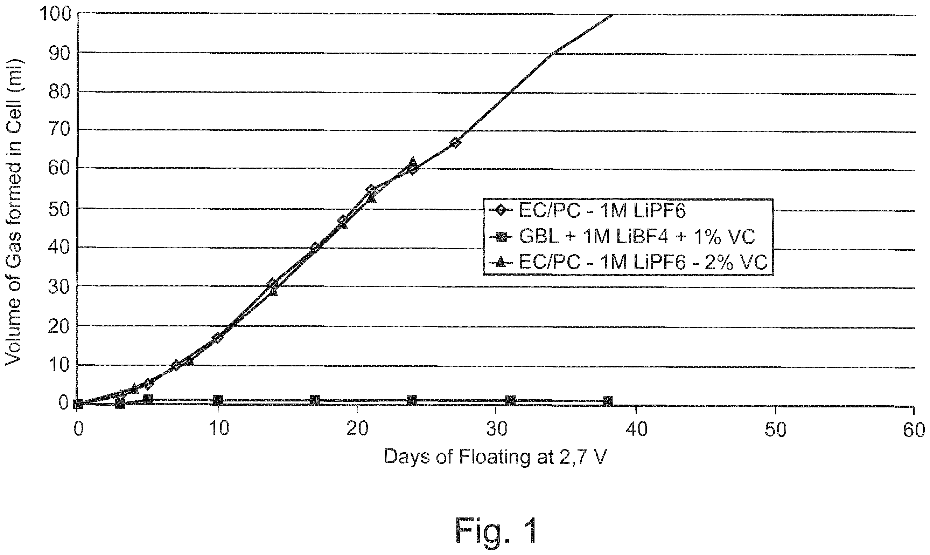

Fig. 1 Comparison of gassing between three electrochemical cells with different electrochemical cell electrolytes.

### Examples

### Example 1: Manufacture of electrochemical cells

The manufacture of electrochemical cells for use with an electrochemical cell electrolyte according to the invention is exemplified. 16Ah pouch cells with a lithium titanate anode (Li4Ti5O12) and a NCA cathode (lithium nickel cobalt aluminium oxide LiNi1-x-yCoxAlyO2) serve as an example.

The cells are made from laminated bicells, containing one anode and a cathode on either side of the anode, laminated together by a ceramic separator. The separator is made of a porous polymer foil that contains a high amount of ceramic lithium aluminium titanium phosphate.

The electrodes are made by the following way:
1) anode: a slurry containing active material, conductive additive, binder and a solvent is cast on a copper or aluminium foil. The foil is then dried. The same action is repeated on the other side of the copper or aluminium foil. The foil is then calendered. The solvent can be water or acetone.
2) cathode: a slurry containing active material, conductive additive, binder and a solvent is cast on an aluminium foil. The foil is then dried and calandered. The solvent can be water or acetone.

The bicells are made the following way: Separator foil is laminated on both sides of the anode and then cathode foils are laminated on both sides of the anode/separator assembly.

The bicells are then stacked, A1 and Cu tabs are welded on the current collector foils, the stacks put in pouches, filled with electrolyte and sealed. The sealed cells are then tempered, submitted to a formation cycle, aged and evacuated. Different electrolytes are used.

### Example 2: Measurement of gassing

### (Reference Example)

Electrochemical cells manufactured as described above have been employed for gassing experiments. The gassing experiments are conducted as follows:

The volume of the fresh cell is measured. The cells are then put in an oven at 50°C and kept at 2,7V, i.e. in the fully charged state. This is to force the gassing of titanate. It is known that gassing of titanate is heavier in the charged state and at elevated temperatures. In regular intervals the cell is taken from the oven and the cell volume is measured again. The difference in volume is reported in the graphs (see below).

Figure 1 shows the exemplary application of the measurement of gassing:

Three cells are compared. All cells have been produced the same way, except the electrolyte filling. One cell uses EC/PC (1:3) and 1M LiPF6; the second cell uses EC/PC (1:3), 1M LiPF6 and 2% VC; and the third cell uses γ-Butyrolactone (GBL), 1M LiBF4 and 1% VC as electrochemical cell electrolyte.

It can be seen that the gassing of the electrochemical cell is drastically reduced if the electrolyte is changed from EC/PC / 1M LiPF6 to GBL / LiBF4 / 1% VC. The effect of VC alone is negligible as a comparison between EC/PC / 1M LiPF6 and EC/PC / 1M LiPF6 / 2% VC shows. GBL / LiPF6 cannot be used as GBL / LiPF6 forms a very thick SEI on the anode and thus the cells would not function correctly. The direct comparison of EC/PC / 1M LiPF6 and GBL / LiBF4 can, thus, not be done.

## Claims

1. An electrochemical cell electrolyte comprising an electrolyte salt, an electrolyte solvent and an electrolyte additive wherein the electrolyte solvent is selected from cyclic ethers and additionally comprises linear carbonates.

2. The electrochemical cell electrolyte according to claim 1, wherein the cyclic ethers are selected from the group comprising tetrahydrofuran (THF) and 2-methyltetrahydrofuran (2-Me-THF).

3. The electrochemical cell electrolyte according to claim 1 or 2, wherein the linear carbonates are selected from the group comprising dimethyl carbonates (DMC), diethyl carbonate (DEC) and ethyl methyl carbonate (EMC).

4. The electrochemical cell electrolyte according to any of the preceding claims, wherein the electrolyte salt is selected from the group comprising lithium perchlorate (LiClO₄), lithium hexafluorophosphate (LiPF₆), lithium tetrafluoroborate (LiBF₄), lithium hexafluoroarsenate (LiAsF₆), lithium hexafluoroantimonate (LiSbF₆), lithium trifluoromethanesulfonate (LiCF₃SO₃), lithium bis[(trifluoromethyl)sulfonyl]imide (LN(CF₃SO₂)₂), lithium bis[(pentafluoroethyl)sulfonyl]imide (LiN(C₂F₅SO₂)₂), lithium bisoxalatoborate (LiBOB), lithium difluorooxalatoborate (LidFOB), lithium trifluoro tris(pentafluoroethyl)phosphate (LiFAP) and lithium tetraphenylborate (Li(C₆H₅)₄B).

5. The electrochemical cell electrolyte according to any of the preceding claims, wherein the electrolyte additive represents up to 5 % of the electrochemical cell electrolyte.

6. The electrochemical cell electrolyte according to any of the preceding claims, wherein the electrolyte additive is selected from the group comprising vinylene carbonate, vinyl ethylene carbonate, propane sultone, N-containing heterocycles and aminated aromatic compounds.

7. The electrochemical cell electrolyte according to claim 6, wherein the N-containing heterocycles are selected from the group comprising pyrrole, 2-methyl-1-pyrroline, 1-methylpyrroline, 1-vinyl-2-pyrrolidinone, pyridine, 2-picoline, 3- picoline, 4-picoline, 2-vinylpyridine, 4-vinylpyridine, dimethyl-pyridine-amine (DMPA), boran-pyridine-complex and mixtures thereof.

8. The electrochemical cell electrolyte according to claim 6, wherein the aminated aromatic compounds are selected from the group comprising aniline, toluidine, diphenylamine, naphtylamine, alkylanilines and dialkylanilines.

9. An electrochemical cell comprising the electrochemical cell electrolyte according to any of the preceding claims, an anode, a cathode and a separator.

10. The electrochemical cell according to claim 9, wherein the anode is of a material comprising Li₄Ti₅O₁₂, Li₂Ti₃O₇, LiₓTiO₂, TiO₂, TiO₂(OH)ₓ and mixtures thereof.

11. The electrochemical cell according to claim 10, wherein the anode material is additionally coated with carbon.

12. The electrochemical cell according to claim 10 or 11, wherein the anode material is a mixture of the anode material according to claims 10 or 11 and carbonaceous material, wherein the carbonaceous material is selected from the group comprising graphite, hard carbon, amorphous carbon, carbon-containing core-shell material and silicon containing material.

13. The electrochemical cell according to any of claims 9 to 12, wherein the cathode is of a material comprising LiCoO₂, LiNiO₂, LiNi_{1-x-y}CoₓMn_{y}O₂, LiNi_{1-x-y}CoₓAl_{y}O₂, LiMn₂O₄, LiM₂₋ₓMn_{4-y}O₄, LiMPO₄, wherein M comprises Fe, Mn, Co or Ni, LiA_{y}MₓPO₄, wherein A comprises B, P, Si, Ti, Zr, Hf, Cr, Mo or W, and mixtures thereof.

14. The electrochemical cell according to claim 13, wherein the cathode material is additionally coated with carbon, oxides or phosphates.

15. The electrochemical cell according to any of claims 9 to 14, wherein the separator comprises ceramic and/or glass particles, such as ceramic lithium aluminium titanium phosphate.

16. A method for manufacturing an electrochemical cell, the method comprising the following steps:
- providing at least one anode, at least one cathode and at least one separator between the at least one anode and the at least one cathode; and
- filling an electrochemical cell electrolyte between the anode and the cathode, wherein the electrochemical cell electrolyte comprises an electrolyte salt, an electrolyte solvent and an electrolyte additive wherein the electrolyte solvent is selected from cyclic ethers and additionally comprises linear carbonates.

17. The method according to claim 16, wherein the electrochemical cell electrolyte is an electrochemical cell electrolyte according to any of claims 2 to 8.

18. The method according to claim 16 or 17, wherein the steps of providing the at least one anode, the at least one cathode and the at least one separator comprise laminating the at least one anode, the at least one cathode and the at least one separator to each other.

19. A use of an electrochemical cell electrolyte according to any of claims 1 to 8 in an electrochemical cell comprising an anode, wherein the anode material is selected from the group comprising Li₄Ti₅O₁₂, Li₂Ti₃O₇, LiₓTiO₂, TiO₂, TiO₂(OH)ₓ and mixtures thereof.

20. A use of an electrochemical cell according to any of claims 9 to 15 in consumer electronics, stationary applications as storage of renewable energy, grid levelling, large hybrid diesel engines, military, hybrid electric vehicles (HEV-s), and aerospace applications.

## Patentansprüche

1. Ein elektrochemischer Zellelektrolyt, umfassend ein Elektrolytsalz, ein Elektrolytlösungsmittel und ein Elektrolytadditiv, wobei das Elektrolytlösungsmittel aus cyclischen Ethern ausgewählt ist und zusätzlich lineare Carbonate enthält.

2. Der elektrochemische Zellelektrolyt nach Anspruch 1, wobei die cyclischen Ether ausgewählt sind aus der Gruppe umfassend Tetrahydrofuran (THF) und 2-Methyltetrahydrofuran (2-Me-THF).

3. Der elektrochemische Zellelektrolyt nach Anspruch 1 oder 2, wobei die linearen Carbonate ausgewählt sind aus der Gruppe umfassend Dimethylcarbonat (DMC), Diethylcarbonat (DEC) und Ethylmethylcarbonat (EMV).

4. Der elektrochemische Zellelektrolyt nach einem der vorhergehenden Ansprüche, wobei das Elektrolytsalz ausgewählt ist aus der gruppe umfassend Lithiumperchlorate (LiClO₄), Lithiumhexafluorophosphat (LiPF₆), Lithiumtetrafluoroborat (LiBF₄), Lithiumhexafluoroarsenat (LiAsF₆), Lithiumhexafluoroantimonat (LiSbF₆), Lithiumtrifluoromethanesulfonat (LiCF₃SO₃), Lithium-bis[(trifluoromethyl)sulfonyl]imid (LiN(CF₃SO₂)₂), Lithium-bis[(pentafluoroethyl)sulfonyl]imid (LiN(C₂F₅SO₂)₂), Lithiumbis(oxalato)borat (LiBOB), Lithium-difluorooxalatoborat (LidFOB), Lithiumtrifluoro-tris(pentafluoroethyl)phosphat (LiFAP) und Lithiumtetraphenylborat (Li(C₆H₅)₄B).

5. Der elektrochemische Zellelektrolyt nach einem der vorhergehenden Ansprüche, wobei das Elektrolytadditiv bis zu 5% des elektrochemischen Zellelektrolyten darstellt.

6. Der elektrochemische Zellelektrolyt nach einem der vorhergehenden Ansprüche, wobei das Elektrolytadditiv ausgewählt ist aus der Gruppe umfassend Vinylencarbonat, Vinylethylencarbonat, Propansulton, N-haltige Heterocyclen und aminierte aromatische Verbindungen.

7. Der elektrochemische Zellelektrolyt nach Anspruch 6, wobei die N-haltigen Heterozyklen ausgewählt sind aus der Gruppe umfassend Pyrrol, 2-Methyl-1-pyrrolin, 1-Methylpyrrolin, 1-Vinyl-2-pyrrolidinon, Pyridin, 2-Picolin, 3 - Picolin, 4-Picolin, 2-Vinylpyridin, 4-Vinylpyridin, Dimethyl-pyridin-amin (DMPA), Bor-Pyridin-Komplex und Mischungen davon.

8. Der elektrochemische Zellelektrolyt nach Anspruch 6, wobei die aminierten aromatischen Verbindungen ausgewählt sind aus der Gruppe umfassend Anilin, Toluidin, Diphenylamin, Naphtylamin, Alkylaniline und Dialkylaniline.

9. Eine elektrochemische Zelle, umfassend den elektrochemischen Zellelektrolyten nach einem der vorhergehenden Ansprüche, eine Anode, eine Kathode und einen Separator.

10. Die elektrochemische Zelle nach Anspruch 9, wobei die Anode aus einem Material besteht, das Li₄Ti₅O₁₂, Li₂Ti₃O₇, LiₓTiO₂, TiO₂, TiO₂(OH)ₓ und Mischungen davon umfasst.

11. Elektrochemische Zelle nach Anspruch 10, wobei das Anodenmaterial zusätzlich mit Kohlenstoff beschichtet ist.

12. Die elektrochemische Zelle nach Anspruch 10 oder 11, wobei das Anodenmaterial ein Gemisch aus dem Anodenmaterial nach Anspruch 10 oder 11 und kohlenstoffhaltigem Material ist, wobei das kohlenstoffhaltige Material ausgewählt ist aus der Gruppe umfassend Graphit, harter Kohlenstoff, amorpher Kohlenstoff, Kohlenstoff -haltiges Kern-Schale-Material und Silicium enthaltendes Material.

13. Die elektrochemische Zelle nach einem der Ansprüche 9 bis 12, wobei die Kathode aus einem Material besteht, das LiCoO₂, LiNiO₂, LiNi_{1x-y}CoₓMn_{y}O₂, LiNi_{1-x-y}CoₓAl_{y}O₂, LiMn₂O₄, LiM₂₋ₓMn_{4-y}O₄, LiMPO₄, wherein M comprises Fe, Mn, Co or Ni, LiA_{y}MₓPO₄ umfasst, wobei A B, P, Si, Ti, Zr, Hf, Cr, Mo oder W und Mischungen davon umfasst.

14. Die elektrochemische Zelle nach Anspruch 13, wobei das Kathodenmaterial zusätzlich mit Kohlenstoff, Oxiden oder Phosphaten beschichtet ist.

15. Die elektrochemische Zelle nach einem der Ansprüche 9 bis 14, wobei der Separator Keramik- und/oder Glaspartikel, wie keramisches Lithiumaluminiumtitanphosphat, umfasst.

16. Ein Verfahren zur Herstellung einer elektrochemischen Zelle, wobei das Verfahren die folgenden Schritte umfasst:
- Bereitstellen mindestens einer Anode, mindestens einer Kathode und mindestens eines Separators zwischen der mindestens einen Anode und der mindestens einen Kathode; und
- Füllen eines elektrochemischen Zellelektrolyten zwischen Anode und Kathode, wobei der elektrochemische Zellelektrolyt ein Elektrolytsalz, ein Elektrolytlösungsmittel und ein Elektrolytadditiv umfasst, wobei das Elektrolytlösungsmittel aus cyclischen Ethern ausgewählt ist und zusätzlich lineare Carbonate enthält.

17. Das Verfahren nach Anspruch 16, wobei der elektrochemische Zellelektrolyt ein elektrochemischer Zellelektrolyt nach einem der Ansprüche 2 bis 8 ist.

18. Das Verfahren nach Anspruch 16 oder 17, wobei die Schritte des Bereitstellens der mindestens einen Anode, der mindestens einen Kathode und des mindestens einen Separators das Laminieren der mindestens einen Anode, der mindestens einen Kathode und des mindestens einen Separators aneinander umfasst.

19. Eine Verwendung eines elektrochemischen Zellelektrolyten nach einem der Ansprüche 1 bis 8 in einer elektrochemischen Zelle, die eine Anode umfasst, wobei das Anodenmaterial ausgewählt ist aus der Gruppe umfassend Li₄Ti₅O₁₂, Li₂Ti₃O₇, LiₓTiO₂, TiO₂, TiO₂(OH)ₓ und Mischungen davon.

20. Eine Verwendung einer elektrochemischen Zelle nach einem der Ansprüche 9 bis 15 in der Unterhaltungselektronik, stationären Anwendungen als Speicherung von erneuerbarer Energie, Gitternivellierung, großen Hybrid-Dieselmotoren, Militär-, Hybrid-Elektrofahrzeugen (HEV-s) und Luft- und Raumfahrtanwendungen.

## Revendications

1. Electrolyte cellulaire électrochimique comprenant un sel d'électrolyte, un solvant d'électrolyte et un additif d'électrolyte, dans lequel le solvant d'électrolyte est choisi parmi les éthers cycliques et comprend en outre des carbonates linéaires.

2. Electrolyte cellulaire électrochimique selon la revendication 1, dans lequel les éthers cycliques sont choisis dans le groupe comprenant tétrahydrofurane (THF) et 2-méthyltétrahydrofurane (2-Me-THF).

3. Electrolyte cellulaire électrochimique selon la revendication 1 ou 2, dans lequel les carbonates linéaires sont choisis dans le groupe comprenant carbonate de diméthyle (DMC), carbonate de diéthyle (DEC) et carbonate d'éthyle méthyle (EMC).

4. Electrolyte cellulaire électrochimique selon l'une quelconque des revendications précédentes, dans lequel le sel d'électrolyte est choisi dans le groupe comprenant perchlorate de lithium (LiClO₄), hexafluorophosphate de lithium (LiPF₆), tétrafluoroborate de lithium (LiBF₄), hexafluoroarsenate de lithium (LiAsF₆), hexafluoroantimonate de lithium (LiSbF₆), trifluorométhanesulfonate de lithium (LiCF₃SO₃), bis[(trifluoromethyl)sulfonyl]imide de lithium (LiN(CF₃SO₂)₂), bis[(pentafluoroéthyl)sulfonyl]imide de lithium (LiN(C₂F_{S}SO₂)₂), bisoxalatoborate de lithium (LiBOB), difluorooxalatoborate de lithium (LidFOB), trifluoro tris(pentafluoroethyl)phosphate de lithium (LiFAP) et tétraphénylborate de lithium (Li(C₆H₅)₄B).

5. Electrolyte cellulaire électrochimique selon l'une quelconque des revendications précédentes, dans lequel l'additif d'électrolyte représente jusqu'à 5 % de l'électrolyte cellulaire électrochimique.

6. Electrolyte cellulaire électrochimique selon l'une quelconque des revendications précédentes, dans lequel l'additif d'électrolyte est choisi dans le groupe comprenant carbonate de vinylène, carbonate de vinyle éthylène, propane sultone, hétérocycles contenant N et composés aromatiques aminés.

7. Electrolyte cellulaire électrochimique selon la revendication 6, dans lequel les hétérocycles contenant N sont choisis dans le groupe comprenant pyrrole, 2-methyl-1-pyrroline, 1-methylpyrroline, 1-vinyl-2-pyrrolidinone, pyridine, 2-picoline, 3-picoline, 4-picoline, 2-vinylpyridine, 4-vinylpyridine, diméthyle-pyridine-amine (DMPA), complexe pyridine borane et mélanges de ceux-ci.

8. Electrolyte cellulaire électrochimique selon la revendication 6, dans lequel les composés aromatiques aminés sont choisis dans le groupe comprenant aniline, toluidine, diphénylamine, naphtylamine, alkylanilines et dialkylanilines.

9. Cellule électrochimique comprenant un électrolyte cellulaire électrochimique selon l'une quelconque des revendications précédentes, une anode, une cathode et un séparateur.

10. Cellule électrochimique selon la revendication 9, dans laquelle l'anode est dans un matériau comprenant Li₄Ti₅O₁₂, Li₂Ti₃O₇, LiₓTiO₂, TiO₂, TiO₂(OH)ₓ et un mélange de ceux-ci.

11. Cellule électrochimique selon la revendication 10, dans laquelle le matériau d'anode est en outre revêtu de carbone.

12. Cellule électrochimique selon la revendication 10 ou 11, dans laquelle le matériau d'anode est un mélange du matériau d'anode selon la revendication 10 ou 11 et de matériau carboné, le matériau carboné étant choisi dans le groupe comprenant graphite, carbone dur, carbone amorphe, matériau coeur-coquille comprenant du carbone et matériau comprenant du silicium.

13. Cellule électrochimique selon l'une quelconque des revendications 9 à 12, dans laquelle la cathode est faite d'un matériau comprenant LiCoO₂, LiNiO₂, LiNi_{1-x-y}CoₓMn_{y}O₂, LiNi_{1-x-y}CoₓAl_{y}O₂, LiMn₂O₄, LiM₂₋ₓMn_{4-y}O₄, LiMPO₄, dans laquelle M comprend Fe, Mn, Co ou Ni, LiA_{y}MₓPO₄, dans laquelle A comprend B, P, Si, Ti, Zr, Hf, Cr, Mo ou W, et mélanges de ceux-ci..

14. Cellule électrochimique selon la revendication 13, dans laquelle le matériau de cathode est en outre revêtu de carbone, oxydes ou phosphates.

15. Cellule électrochimique selon l'une quelconque des revendications 9 à 14, dans laquelle le séparateur comprend des particules de céramique et/ou verres, telle que lithium aluminium titane phosphate céramique.

16. Procédé de fabrication d'une cellule, le procédé comprenant les étapes suivantes :
- Fournir au moins une anode, au moins une cathode et au moins un séparateur entre la au moins une anode et la au moins une cathode ; et
- Remplir avec un électrolyte cellulaire électrochimique entre l'anode et la cathode, l'électrolyte cellulaire électrochimique comprenant un sel d'électrolyte, un solvant d'électrolyte et un additif d'électrolyte, dans lequel le solvant d'électrolyte est choisi parmi les éthers cycliques et comprend en outre des carbonates linéaires.

17. Procédé selon la revendication 16, dans lequel l'électrolyte cellulaire électrochimique est un électrolyte cellulaire selon l'une quelconque des revendications 2 à 8.

18. Procédé selon la revendication 16 ou 17, dans lequel l'étape de fournir la au moins une anode, la au moins une cathode et le au moins un séparateur comprend l'étape de laminer les uns sur les autres la au moins une anode, la au moins une cathode et le au moins un séparateur.

19. Utilisation d'un électrolyte cellulaire électrochimique selon l'une quelconque des revendications 1 to 8 dans une cellule électrochimique comprenant une anode, le matériau d'anode étant choisi dans le groupe comprenant Li₄Ti₅O₁₂, Li₂Ti₃O₇, LiₓTiO₂, TiO₂, TiO₂(OH)ₓ et un mélange de ceux-ci.

20. Utilisation d'une cellule électrochimique selon l'une quelconque des revendications 9 to 15 dans l'électronique grand public, des applications stationnaires comme stockage d'énergie renouvelable, nivellement de grille, grands moteurs diesel hybrides, applications militaires, véhicules électriques hybrides (HEV-s) et applications aérospatiales.
